# EUROPÄISCHE PATENTSCHRIFT

(11) **EP 2 353 737 B1**
(45) Veröffentlichungstag und Bekanntmachung des Hinweises auf die Patenterteilung: **26.11.2014**
(21) Anmeldenummer: 11000421.5
(22) Anmeldetag: 20.01.2011
(51) Int. Cl.: B06B 3/00, B23K 20/10, B26D 7/08, B29C 65/08

(54) **Vorrichtung und Verfahren zur Ultraschall-Materialbearbeitung**
Device and method for ultrasound material processing
Dispositif et procédé de traitement ultrasonique de matériau

(30) Priorität: 21.01.2010 DE 102010005230
(43) Veröffentlichungstag der Anmeldung: 10.08.2011
(73) Patentinhaber: Athena Technologie Beratung GmbH, 33100 Paderborn (DE)
(72) Erfinder: Littmann, Walter, 31855 Aerzen (DE)
(74) Vertreter: Wickord, Wiro

(56) Entgegenhaltungen:
- EP-A1- 1 990 032
- GB-A- 2 120 497
- JP-A- 2004 160 464
- JP-A- 2005 313 209
- US-A1- 2004 112 547

## Beschreibung

Die Erfindung betrifft eine Vorrichtung nach dem Oberbegriff des Patentanspruchs 1.

Ferner betrifft die Erfindung ein Verfahren nach dem Oberbegriff des Patentanspruchs 16.

Zur Anregung von Strukturschwingungen in Ultraschallwerkzeugen, d. h. mit einer elastischen Deformation einhergehende Schwingungen derselben, werden üblicherweise elektromechanische (z. B. piezoelektrische oder magnetostriktive) Energiewandler verwendet. Sie dienen dazu, elektrische Wechselspannungen in mechanische Wechseldehnungen zu transformieren und auf diese Weise Strukturschwingungen in mechanisch angekoppelten Wellenleitern anzuregen. Der Begriff Wellenleiter bezeichnet allgemein Körper, die im Ultraschallbereich schwingfähig sind. In kommerziellen Anwendungen ist der elektromechanische Energiewandler gewöhnlich als integraler Bestandteil eines Verbundschwingers ausgeführt, der beispielsweise aus piezoelektrischen Ringen mit metallischen Endabschnitten besteht. Dieser Verbundschwinger wird im Rahmen dieser Erfindung als Konverter bezeichnet. Seine Länge ist so gewählt, dass seine erste Längsschwingung oberhalb 20 kHz auftritt. Die Längen der an den Konverter angekoppelten Wellenleiter sind typischerweise so gewählt, dass im unbelasteten Zustand des Ultraschallwerkzeugs jeweils die Resonanzfrequenz einer ersten Längsschwingung der Wellenleiter mit der Resonanzfrequenz der ersten Längsschwingung des Konverters übereinstimmt (Halbwellensynthese-Ansatz).

Die elementare Physik gibt hierbei vor, dass sich in diesen abgestimmten Wellenleitern sinusförmige Amplitudenverteilungen einstellen. So sind die Amplituden der Längsschwingung in einem in seiner Grundschwingung angeregten schlanken Stab (häufig als λ/2-Längsschwinger bezeichnet) entlang seiner Längsmittelachse cosinusförmig verteilt. Schwingungsmaxima befinden sich an den Stirnseiten des Stabes.

Ein typisches Ultraschallwerkzeug für industrielle Anwendungen besteht aus drei derartigen miteinander verschraubten λ/2-Längsschwingern, die als Konverter, Booster und Sonotrode bezeichnet werden und die in einer Längsrichtung des Ultraschallwerkzeugs hintereinander angeordnet sind. Der Konverter dient - wie beschrieben - als elektromechanischer Energiewandler. Als Sonotrode wird derjenige λ/2-Längsschwinger bezeichnet, der die Schnittstelle des Ultraschallwerkzeugs zu einer Prozesszone bildet. Zwischen Konverter und Sonotrode findet man häufig den Booster, mit dem eine Amplitudenübersetzung vom Konverter zur Sonotrode erzielt werden kann. Üblicherweise wird durch geeignete Querschnittsverläufe entlang der Längsmittelachse des Ultraschall-Werkzeugs dafür gesorgt, dass die Auslenkungsamplitude zur Prozesszone hin verstärkt wird (Amplitudentransformation).

Um die Schwingung des Ultraschallwerkzeugs einem Prozess zuzuführen, kommen zur Schallauskopplung nur die Stirnseite der Sonotrode und/oder unmittelbar zur Stirnseite benachbarte Abschnitte der Seitenflächen in Betracht, da die Amplituden entsprechend der cosinusförmigen Amplitudenverteilung innerhalb der λ/2-Längsschwinger zur Mitte des Stabes hin bis auf null absinken (Schwingungsknoten). Dies stellt für viele technische Anwendungsfälle eine beträchtliche Einschränkung dar.

Bekannt sind zwei grundsätzliche Möglichkeiten, wie die Ultraschallschwingung am Werkzeugende in die Prozesszone ausgekoppelt werden kann: Wird der Prozess an die Stirnseite der Sonotrode angekoppelt, so erfolgt die Vibrationsauskopplung in Richtung der Flächennormalen der Stirnfläche (out-of-plane- . Schwingung). Hält man das vordere Ende der Sonotrode hingegen seitlich gegen eine Prozesszone, so ist die Schall auskoppelnde Ebene parallel zur Schwingungsrichtung orientiert (inplane-Schwingung). Die Begriffe inplane und out-of-plane sind hierbei den gebräuchlichen Definitionen in der Schwingungsmesstechnik (Laservibrometrie) entliehen.

Ultraschallwerkzeuge mit dem geschilderten dreiteiligen Aufbau aus Konverter, Booster und Sonotrode werden heutzutage in der Ultraschalltechnik zum Ultraschallbohren, -schweißen, - schneiden, -sägen oder zur sonstigen Ultraschall-Materialbearbeitung eingesetzt.

In der Wirkkette der drei λ/2-Längsschwinger verstärkt die Sonotrode die Auslenkungsamplitude weiter und bildet ausgangsseitig die Schnittstelle zur Prozesszone, in der typischerweise eine hohe Auslenkungsamplitude benötigt wird. Dies ist beispielsweise beim Ultraschallschneiden oder -schweißen der Fall. Die Amplitudenverstärkung in Booster und Sonotrode - und gegebenenfalls auch im Konverter - erfolgt durch geeignet gewählte Querschnittsverläufe, z. B. Stufen-, Exponential-, Catenoid- oder Konusverlauf sowie Kombinationen davon (sog. Hornprofile), vergleiche Hamonic/ Decarpigny (Edt.), "Power Sonic and Ultrasonic Transducer Design", Springer-Verlag 1988, hierin Kapitel 4: Gallego-Juarez, "Transducer Needs for Macrosonics*".*

Mit dem Begriff Ultraschallbearbeitung werden im Sprachgebrauch dieser Erfindung verallgemeinernd alle Bearbeitungsverfahren, z. B. also Fügen, Trennen, Verbinden, Bohren, Fräsen, Schleifen, Schweißen usw. bezeichnet.

Während sich beim Konverter aus Effizienzgründen in der überwiegenden Zahl von Anwendungen mit höherer Leistung der λ/2-Aufbau mit mechanisch vörgespannten Piezoscheiben durchgesetzt hat, finden sich vornehmlich beim Booster und bei der Sonotrode diverse Abweichungen von dem Standardkonzept. Aus Platz- und Kostengründen wird der Booster gelegentlich eingespart, so dass eine Kombination aus Konverter und Sonotrode verbleibt. Vornehmlich in Anwendungen mit niedrigem Leistungsbereich findet man auch integrierte Lösungen mit nur einer Halbwelle, die auf einer Seite des verbleibenden Schwingungsknotens die Piezoscheiben und auf der anderen die Schnittstelle zum Prozess enthalten. Konverter und Sonotrode sind in diesem Spezialfall ein- und dasselbe Bauteil.

Die größte Vielfalt von Varianten trifft man beim Aufbau der Sonotrode an, denn ihre Gestaltung wird maßgeblich durch Vorgaben des Prozesses bestimmt. In zunehmendem Maße werden in modernen Prozessen Sonotroden nachgefragt, die nicht nur an ihrer Stirnfläche oder seitlich im vordersten Bereich hohe Amplituden bereitstellen, sondern die entlang einer Kante oder gar auf einer Fläche gleichmäßige Amplituden besitzen. Mit den Schwingungsformen von einfachen Stäben oder Rechtecken ist so etwas nicht erreichbar, da sich hier aus energetischen Gründen stets sinusförmige Amplitudenverteilungen ausbilden.

In der JP-A-2005 313209 ist ein Sonotrodenkonzept offenbart, bei dem zwei gegenüberliegende Stirnflächen einer geschlitzten Sonotrode, die in einer Biegeschwingungsform schwingt, reine inplane-Vibrationen ausführen. Allerdings besitzen die Stirnflächen auch hier nur kleine Abmessungen im Vergleich zur Wellenlänge.

Geometrisch einfache Körper mit konstanter Amplitude entlang einer Linie sind Kreisplatten sowie auf ihre Radialresonanz abgestimmte Scheiben und Ringe. Man findet sie inzwischen vereinzelt in Spezialanwendungen der Ultraschalltechnik, bei denen die runden Geometrien kein Ausschlusskriterium darstellen, vergleiche Povey/ Mason (Edt.), "Ultrasound in Food Processing", Thomson Science 1998 (hierin Kapitel 14: Rawson, "An introduction to ultrasonic food cutting*").*

Häufiger findet man in der technischen Anwendung Sonotroden in Schlitzbauweise, vergleiche auch hier *Gallego-Juarez* in *Hamonic*/ *Decarpigny* und *Rawson* in *Povey*/ *Mason.* Dieser Bauweise liegt folgendes Grundprinzip zugrunde: Homogene Stab-Längsschwinger weisen an ihrer Stirnfläche ungleichmäßige Amplitudenverteilungen auf, sobald die Querabmessungen in die Größenordnung λ/4 kommen. Ursache ist die Querdehnung im Stab, die im Knotenbereich der Längsdehnung am größten ist und deshalb über große Stabquerschnitte konstante Axialverformungen unterbindet. Bringt man parallel zur Längsschwingung einen hinreichend langen Schlitz in die Sonotrode ein, so kann sich jeder der beiden entstehenden Stege in Querrichtung frei ausdehnen. Dies geschieht selbst dann, wenn die beiden Stege in ihren Außenbereichen verbunden bleiben, denn in diesem Bereich gibt es keine nennenswerten Transversalspannungen. Durch Einbringen hinreichend vieler paralleler Schlitze lassen sich auf diese Weise Längsschwinger mit nahezu beliebig großen Querabmessungen herstellen, deren Ausgangsseite eine konstante Amplitude aufweist. Bei flachen geschlitzten Rechteckschwingern erreicht man gleichförmige Ausgangsamplituden entlang einer Kante, bei blockförmigen Schwingern mit passenden Schlitzebenen in zwei orthogonalen Richtungen sogar entlang ganzer Flächen. Die Schwingungsrichtung ist parallel zur Symmetrieachse beziehungsweise zur Symmetrieebene der Schlitze.

Kommerzielle Anwendung finden diese geschlitzten Sonotroden vor allem beim Ultraschallschneiden und beim Ultraschallschweißen von Kunststoff. Der jeweilige Prozess nutzt dabei eine Schwingung aus der Stirnfläche der Sonotrode (out-of-plane-Schwingung).

Mit den oben beschriebenen geschlitzten Sonotroden ist es lediglich möglich, gleichmäßige Schwingungen entlang einer Kante oder einer Fläche in der oben definierten out-of-plane-Richtung zu erzeugen.

Bisher ist keine Sonotrodenbauform bekannt, mit der eine Schwingung mit konstanter Amplitude entlang einer in Schwingungsrichtung orientierten Kante oder Fläche erzeugt werden kann (linienförmige beziehungsweise flächige inplane-Schwingung). Daher muss man sich in Anwendungen, die eine inplane-Schwingung verlangen oder durch diese begünstigt werden (z. B. Ultraschallschweißen von Metallen, Ultraschallschneiden, Ultraschallsägen) auf relativ kleine Prozesszonen beschränken, was die Anwendbarkeit dieser Verfahren erheblich einschränkt.

Aufgabe der vorliegenden Erfindung ist es daher, eine verbesserte Vorrichtung und ein verbessertes Verfahren der Ultraschallbearbeitung unter Nutzung von inplane-Schwingungen anzugeben, wobei diese gleichmäßig entlang einer langen Kante auftreten und in eine Prozesszone übertragen werden können.

Zur Lösung der Aufgabe weist die erfindungsgemäße Vorrichtung die Merkmale des Patentanspruchs 1 auf.

Der besondere Vorteil der Erfindung besteht darin, dass eine lange Prozesszone gleichmäßig zu Schwingungen in inplane-Richtung angeregt werden kann und nicht wie im Stand der Technik nur ein (bezogen auf die Wellenlänge in der Sonotrode) kurzer Bereich. Beispielsweise beim Ultraschallschneiden oder -sägen ermöglicht dies die gleichmäßige Beschallung langer Schneiden mit Schwingungen in inplane-Richtung, so dass eine natürliche Schnittbewegung (wie man sie z.B. vom Schneiden einer Tomate oder vom Sägen eines Bretts gewohnt ist) als Ultraschallschwingung eingekoppelt wird und der manuellen Schneide- oder Sägebewegung überlagert werden kann. Beim Ultraschallschweißen, bei dem bei vielen Materialien (z. B. Metallen) ebenfalls eine inplane-Schwingung zu den besten Schweißergebnissen führt, ergibt sich der Vorteil, dass eine größere Schweißzone mit gleicher Schallintensität beschallt werden kann.

Nach einer bevorzugten Ausführungsform der Erfindung bildet sich in der Sonotrode quer zur Schwingungsrichtung eine Stehwelle aus, deren Amplitude im Bereich der Arbeitsseite der Sonotrode ein zumindest lokales Maximum aufweist. Vorteilhaft wird hierdurch erreicht, dass eine gleichmäßig hohe Amplitude im Bereich der Arbeitsseite entsteht. Die Abstimmung der Geometrie auf eine Stehwelle in Querrichtung des Ultraschallwerkzeugs ermöglicht es, dass die Abmessung der Sonotrode parallel zu seiner Längsmittelachse nicht auf die Wellenlänge im Material abgestimmt werden muss, sondern gemäß den Vorgaben der Anwendung weitgehend frei gewählt werden kann.

Nach einer Weiterbildung der Erfindung entspricht eine Breite b der Sonotrode quer zur Schwingungsrichtung einem ganzzahligen Vielfachen der Wellenlänge (λ). Vorteilhaft wird hierdurch erreicht, dass die normalerweise bei der Scherung eines Körpers zu beobachtende überlagerte Scherung in Transversalrichtung unterdrückt wird, weil die Transversal-Scherkräfte in den beiden λ/2-Wellenteilen des λ-Scherschwingers in entgegengesetzter Richtung auftreten und sich deshalb kompensieren. Entsprechendes lässt sich z. B. auch bei gekoppelten, parallel geschalteten Biegeschwingern erreichen.

Nach einer Weiterbildung der Erfindung ist die Sonotrode symmetrisch bezüglich einer in Schwingungsrichtung verlaufenden Längsmittelachse desselben ausgebildet; ferner sind die Ausnehmungen symmetrisch zur Längsmittelachse der Sonotrode angeordnet; weiterhin weisen die Ausnehmungen eine gleiche Geometrie auf; schließlich ist zwischen in Schwingungsrichtung benachbarten Ausnehmungen mit der Ausnehmungsbreite a ein Steg mit der Stegbreite s angeordnet, wobei das Verhältnis der Ausnehmungsbreite a zur Stegbreite s im Bereich von 0,2 bis 5 liegt. Vorteilhaft kann sich dadurch in der Sonotrode eine Eigenform mit definierter, gleichmäßiger Schwingungsverteilung ausbilden, die schwingungstechnisch besonders robust ist, so dass sie durch Ankopplung eines Prozesses allenfalls geringfügig verändert wird. Es lässt sich bei entsprechend der in den Ansprüchen formulierten Maßnahmen optimierter Bauform eine bzgl. zur Längsmittelachse symmetrische Schwingungsform erzeugen, bei der alle Punkte entlang der Arbeitsseite synchron und parallel zur Längsmittelachse schwingen. Hierzu tragen maßgeblich die passend platzierten Schlitze bei. Ein weiterer Vorteil der bzgl. der Längsmittelachse symmetrischen Ausführung ist, dass sich die Schwingung durch Ankopplung eines in der Frequenz passend abgestimmten Konverters in Verlängerung der Längsmittelachse anregen lässt, ohne die Schwingungsform der Sonotrode zu stören.

Nach einer Weiterbildung der Erfindung ist die Sonotrode in einer Schwingungsebene derselben flächig ausgebildet mit einer Außenseite als Arbeitsseite und/oder Stegen zwischen den Ausnehmungen. Vorteilhaft wird es hierdurch möglich, die Schwingung auf eine Arbeitsseite und damit in eine Prozesszone zu übertragen, so dass diese (z. B. zum Schneiden oder Schweißen) durch Schwingung der Arbeitsseite in der oben definierten inplane-Richtung gleichmäßig beschallt werden kann. Bei flächiger Ausbildung der Sonotrode, deren Dicke klein zur funktionsrelevanten Wellenlänge ist, können Querschwingungen in Dickenrichtung wirkungsvoll verhindert werden, was zur Robustheit des Resonanzschwingungszustands beiträgt.

Nach einer Weiterbildung der Erfindung weist die Sonotrode in der Schwingungsebene einen rechtwinkligen Querschnitt auf mit einer Länge L4 der Arbeitsseite, die größer oder gleich der Breite b der Sonotrode ist. Vorteilhaft wird hierdurch eine kompakte Bauform möglich, selbst wenn eine Kantenlänge der Sonotrode (Länge L4) sehr groß gewählt wird. Der rechtwinklige Aufbau trägt ebenfalls zur robusten Anregbarkeit der Schwingung bei.

Nach einer Weiterbildung der Erfindung ist die Sonotrode aus einer Anzahl kreuz- oder sternförmig angeordneter Rechteckplatten gebildet mit einer Mehrzahl von Kanten als Arbeitsseiten und Stegen zwischen den Ausnehmungen. Vorteil einer Ausführung mit mehreren simultan in gleichförmige inplane-Schwingungen versetzbaren Kanten ist, dass der Schall an mehreren Kanten gleichzeitig ausgekoppelt werden kann, z. B. kann dies bei einem Ultraschallmesser für parallele Schnitte mit definiertem Schnittabstand genutzt werden. Falls ein Ultraschallwerkzeug dieses Typs mit passenden Arbeitsseiten in Rotation versetzt wird, ist es möglich, damit bei geeigneter Gestaltung der Arbeitsseite eine Innenbohrung auszuschleifen. Denkbar ist bei entsprechender Kontur der Arbeitsseite auch die Anwendung als Gewindeschneider mit Ultraschallunterstützung.

Nach einer Weiterbildung der Erfindung ist eine Tiefe t der Sonotrode zur Amplitudenverstärkung von der Längsmittelachse in Richtung der Außenseite verjüngt ausgebildet. Vorteilhaft wird hierdurch eine Amplitudenübersetzung von der Längsmittelachse zur Arbeitsseite erreicht. Dadurch wird es möglich, große Amplituden an der Arbeitsseite zu erreichen, ohne die limitierte mechanische Wechselspannungsgrenze in den Piezoelementen des Konverters zu überschreiten, der zur Schwingungsanregung genutzt wird. Weiterhin können zu große Amplituden an der Schalleinleitungsstelle vermieden werden, was die Ankopplungsstelle entlastet (z.B. Fügebolzen oder Klebschicht, mit der ein Konverter an der Sonotrode befestigt wird).

Nach einer Weiterbildung der Erfindung wird die Sonotrode als ein Zylinder mit einer von der Mantelfläche des Zylinders gebildeten Arbeitsseite und ringschlitzförmigen Ausnehmungen ausgeführt. Vorteilhaft wird es hierdurch möglich die Mantelfläche eines Zylinders komplett in gleichförmige inplane-Schwingungen parallel zur Längsmittelachse zu versetzen. Damit sind vielfältige neue Einsatzgebiete denkbar, z. B. könnte die Innenseite einer kreisförmigen Bohrung mit einem derartig gestalteten Ultraschallschleifwerkzeug ausgeschliffen werden. Die vorgeschlagene Erweiterung ist allerdings fertigungstechnisch aufwändig.

Nach einer Weiterbildung der Erfindung ist zur Verstärkung der von dem Konverter bereitgestellten mechanischen Schwingungsamplitude zwischen dem Konverter und der Sonotrode ein Booster angeordnet. Vorteilhaft wird hierdurch eine zusätzliche Amplitudenvergrößerung vom Konverter zur Sonotrode möglich, wenn der Konverter einen entsprechenden Querschnittsverlauf besitzt. Zudem ergibt sich im Knoten der Längsschwingung des Boosters ein zusätzlicher möglicher Lagerungspunkt, der zur Abstützung von Kräften und Momenten genutzt werden kann. Die Verwendung eines zusätzlichen Boosters erlaubt es zudem, eine Amplituden- und/oder Leistungsanpassung zwischen Konverter und Sonotrode vorzunehmen, so dass ein Standard-Konvertertyp zur Schallerzeugung eingesetzt werden kann. Besonders bei großen Stückzahlen erhöht dies die Wirtschaftlichkeit.

Nach einer Weiterbildung der Erfindung ist der Konverter und/oder der Booster symmetrisch zur Längsmittelachse der Sonotrode angeordnet und/oder die Sonotrode in einem Schwingungsbauch desselben an den Konverter und/oder den Booster angebunden. Vorteilhaft wird hierdurch eine definierte, zentrale Einleitung der Ultraschallschwingung in die Sonotrode möglich.

Zur Lösung der Aufgabe weist das erfindungsgemäße Verfahren die Merkmale des Patentanspruchs 16 auf.

Der besondere Vorteil des erfindungsgemäßen Verfahrens besteht darin, dass die genannten Prozesse durch die Ultraschallunterstützung in inplane-Richtung eine Effizienzsteigerung erlauben, und zwar in einer linienförmig oder flächig ausgedehnten Wirkzone, deren Abmessungen nicht klein im Vergleich zur Wellenlänge der Ultraschallschwingung sein müssen.

Weitere Vorteile der Erfindung ergeben sich aus den weiteren Unteransprüchen.

Ausführungsbeispiele der Erfindung werden nachfolgend anhand der Zeichnungen näher erläutert.
- Figur 1: eine Prinzipdarstellung der erfindungsgemäßen Vorrichtung in einer ersten Ausführungsform (Figur 1a) und die Amplitudenverteilung entlang der Längsmittelachse 7 (Figur 1b),
- Figur 2: die Detailansicht einer Sonotrode 4 des Ultraschallwerkzeugs 1 nach Figur 1 (in Figur 2a Amplitudenverteilung senkrecht zur Längsmittelachse 7, in Figur 2b Vorderansicht der Sonotrode 4, in Figur 2c Seitenansicht der Sonotrode 4),
- Figur 3: einige mögliche Varianten von Sonotroden mit nichtkonstanter Dicke (verdeckte Kanten der Übersichtlichkeit halber nicht dargestellt),
- Figur 4: die Prinzipskizze einer zweiten Ausführungsform der Sonotrode,
- Figur 5: eine dritte (Figur 5a) und vierte (Schnittdarstellung Figur 5b) Ausführungsform der Sonotrode,
- Figur 6: eine zweite Ausführungsform des Ultraschallwerkzeugs 1 mit der Möglichkeit zur beidseitigen Schwingungseinkopplung und zur symmetrischen Kraft-/ Momentenabstützung bei Anpressen der Sonotrode 4 gegen einen Untergrund und
- Figur 7: eine Sonotrode mit zusätzlichen Schlitzen in einer orthogonalen Richtung.

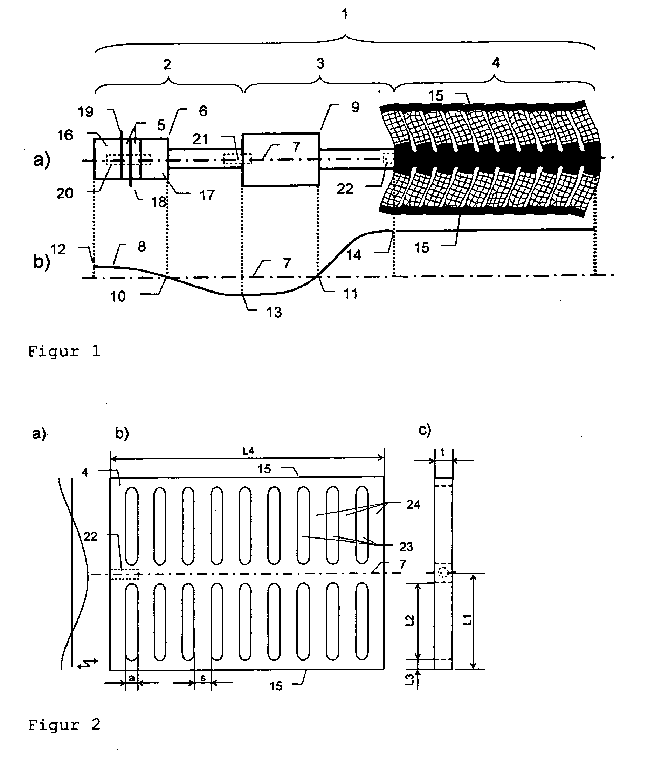

Ein Ultraschallwerkzeug 1 zur ultraschallgestützten Materialbearbeitung gemäß Figur 1a weist als zentrale Funktionsmodule einen Konverter 2, einen Booster 3 und eine Sonotrode 4 auf. Das Ultraschallwerkzeug 1 wird beispielsweise zum Ultraschallschweißen, zum Ultraschallsägen und zum Ultraschallschneiden eingesetzt. Darüber hinaus eignet sich das Ultraschallwerkzeug 1 zur Reduktion von Reibung zwischen zwei Bauteilen, beispielsweise beim Einsetzen einer Passfeder in eine Nut einer Welle. Denkbar ist auch der Einsatz zur Reibungsreduktion für Transportsysteme oder dergleichen. Weiterhin kann die Sonotrode 4 z. B. zum Ultraschallschleifen eingesetzt werden. Denkbar ist in der Verfahrenserweiterung nach Anspruch 12 der Einsatz z. B. zum Ausschleifen einer zylindrischen Innenbohrung (Ultraschall-Reibahle).

In einer beispielhaften Ausführungsform besteht ein Ultraschallsystem 1 aus einem Konverter 2, einem Booster 3 und einer Sonotrode 4 (Figur 1a). Anstatt der im Stand der Technik typischerweise eingesetzten klassischen λ/2-Längsschwinger-Sonotrodenbauform wird eine Sonotrode 4 verwendet, die Scher-Biegeverformungen unterliegt, die dazu führen, dass die Außenseiten 15 gleichförmige Schwingungen parallel, aber in Gegenphase zur Bewegung der Punkte auf der Längsmittelachse 7 ausführen. Die Schwingung einer Außenseite 15 der Sonotrode 4 ist hierbei gleichförmig im Sinne der Anmeldung, wenn alle Punkte auf der Außenseite 15 phasengleich schwingen. Mindestens eine der Außenseiten 15 kann als Arbeitsseite genutzt werden. Hierbei ist es wünschenswert, dass alle Punkte der Arbeitsseite 15 im unbelasteten Zustand der Sonotrode 4 mit einer gleichen Amplitude schwingen. Konstruktiv bedingt kommt es in der Praxis jedoch zu Schwankungen der Amplitude entlang der Außenseiten 15 von 50 Prozent bezogen auf die Maximalamplitude, d. h. das Verhältnis von minimaler Amplitude einerseits zur maximalen Amplitude andererseits liegt bei 0,5. Bei geeigneter Ausführung und entsprechender Optimierung des Ultraschallwerkzeugs beispielsweise mittels einer Finite-Elemente-Analyse kann diese Abweichung auf unter 10 Prozent reduziert werden. Als unbelasteter Zustand wird der Fall bezeichnet, dass die Sonotrode 4 in Luft schwingt. Sobald die Sonotrode 4 belastet wird, also an einer der Außenseiten 15 in Kontakt mit einem Gegenkörper steht, kann dieser Schwingungszustand ggf. geringfügig verändert werden (im Regelfall wird dies an der Arbeitsseite sein, z.B. beim Schneiden, Schweißen o.ä.).

In Figur 1a ist die Sonotrode 4 im verformten Zustand dargestellt (Schwingungsform); makroskopisch kann diese Schwingungsverteilung als λ-Scherschwingung gedeutet werden. Die im Stand der Technik prinzipiell bekannten Komponenten Konverter 2 und Booster 3 sind in Fig. 1 nur schematisch skizziert.

Der in Figur 1a skizzierte, im Wesentlichen rotationssymmetrisch aufgebaute Konverter 2 besteht aus zwei parallel zur Längsmittelachse 7, aber in gegensätzlicher Richtung polarisierten piezoelektrischen Ringen 5 mit Oberflächenelektroden, die fest mit einer metallischen Endmasse 16 und einer gestuften Frontmasse 17 verbunden sind, sowie einem zentralen metallischen Innenbolzen 20, der in geeignete zentrale Innenbohrungen mit Gewinden in der Front- und der Endmasse eingeschraubt ist und zur mechanischen Vorspannung der Piezoringe dient. Zur elektrischen Anregung der Schwingungen des Konverters 2 parallel zu der gemeinsamen Längsmittelachse 7 dienen zwei dünne Elektrodenbleche 18 und 19, die durch die mittels der Verschraubung aufgebrachte Pressung fest mit den beidseitig angrenzenden Oberflächenelektroden der Piezoringe 5 verbunden sind. Das Elektrodenblech 18 steht dabei nicht in Kontakt zum Innenbolzen 20, zur Frontmasse 17 oder zur Endmasse 16. An das Elektrodenblech 18 wird im Betrieb eine elektrische Sinusspannung angelegt, deren Frequenz in etwa der 1. Längs-Eigenfrequenz des Konverters 2 entspricht. An ein zweites Elektrodenblech 19, das zwischen dem linken dargestellten Piezoring und der Endmasse 16 auf entsprechende Weise wie das Elektrodenblech 18 befestigt ist, wird ein elektrisches Null-Potential angelegt, so dass sich die Piezoringe 5 durch die elektrische Wechselspannung periodisch in ihrer Dickenrichtung dehnen und stauchen.

Der in Figur 1a gezeigte gestufte, rotationssymmetrische Booster 3 besteht aus Metall. Seine größere Stirnfläche ist mit der kleineren Stirnfläche des Konverters 2 fest verbunden. Als Verbindungselement dient ein Schraubbolzen 21. Mit der kleineren Stirnfläche des Boosters 3 ist mittels eines weiteren Schraubbolzens 22 die Sonotrode 4 fest verbunden. Die Geometrie des Boosters 3 ist so gewählt, dass seine erste Längsschwingung bei der gleichen Frequenz auftritt wie die erste Längsschwingung des Konverters 2 und die erste Längsschwingung des Boosters 3.

Der Aufbau der Sonotrode 4, die in Bild 1a zum einfacheren Verständnis im verformten Zustand ihrer zum Betrieb genutzten Schwingungsform dargestellt ist, wird anhand der Figuren 2a, 2b und 2c erläutert. Nachfolgend werden zu ihrer Beschreibung die Funktionseinheiten Stege, Ausnehmungen, Außenkanten, Längsmittelachse verwendet. Diese Einteilung vereinfacht die Beschreibung, aber insgesamt handelt es sich um ein abgestimmtes Resonanzsystem, weshalb diese Funktionselemente nicht als unabhängige Einzelteile zu verstehen sind.

In Fig. 2b ist die Sonotrode 4 in einer Vorderansicht, in Fig. 2c in einer Seitenansicht dargestellt. Fig. 2b zeigt ihre rechteckige Grundgeometrie (Länge L4, Breite 2*L1) mit der Längsmittelachse 7 und zwei symmetrisch bezüglich der Längsmittelachse 7 angeordneten Gruppen á neun äquidistant verteilter Ausnehmungen 23 mit Länge L2. Das zwischen den Ausnehmungen 23 sowie das am rechten und linken Rand verbleibende Material wird als Stege 24 bezeichnet. Die Länge L2 der Ausnehmungen 23 ist etwas kleiner gewählt als die halbe Breite L1 der Sonotrode 4, so dass die Stege 24 im Bereich der Längsmittelachse 7 und im Bereich der Außenseiten 15 nicht getrennt sind, sondern einen homogenen Verbund bilden. Die biegeweichen Stege 24 verformen sich dabei vergleichbar mit parallel geschalteten Blattfedern. Dadurch, dass die Stege 24 im Außenbereich verbunden sind, bewegen sich die Außenseiten 15 der Sonotrode 4 in Richtung der Längsmittelachse 7, jedoch in Gegenphase zur Bewegung derselben. Die Sonotrode 4 ist in Verlängerung ihrer Längsmittelachse 7 mit Hilfe des Bolzens 22 mit dem Booster 3 verschraubt.

Die Abmessungen der Sonotrode 4 sind so gewählt, dass die Resonanzfrequenz der Sonotrode 4 bei der gleichen Frequenz auftritt wie die Resonanzfrequenzen der ersten Längsschwingung von Booster 3 und Konverter 2. Die Breite s und die Längen L1 und L2 bestimmen maßgeblich die Ausbildung der in Fig. 1a dargestellten Schwingungsform der Sonotrode 4 und die Lage der zugehörigen Resonanzfrequenz, wobei die Sonotrode 4 in Fig. 2c eine konstante Dicke t besitzt. In Fig. 2a ist die ungefähre Amplitudenverteilung der Auslenkung parallel zur Längsmittelachse 7 skizziert. Ungefähr auf halber Länge der Ausnehmungen 23 befindet sich in jedem Steg 24 ein Schwingungsknoten, im Bereich der Außenseiten 15 und im Bereich der Längsmittelachse 7 ein lokales Schwingungsmaximum (Schwingungsbauch). Da die Sonotrode 4 eine konstante Dicke t besitzt (Fig. 2c) und die beiden Gruppen von Ausnehmungen 24 jeweils in etwa mittig zwischen Außenseite 15 und Längsmittelachse 7 angeordnet sind, ergibt sich senkrecht zur Längsmittelachse 7 die in Fig. 2a skizzierte Auslenkungsverteilung mit in etwa gleicher Amplitude im Bereich der Außenseiten 15 und im Bereich der Längsmittelachse 7. Entlang der Außenseiten 15 treten bezüglich der Schwingungsrichtung parallel zur Längsmittelachse 7 keine Schwingungsknoten auf, und es bildet sich (wie in Fig. 1a ansatzweise erkennbar) allenfalls eine geringe Restwelligkeit der Schwingungsform aus.

Für die Geometrie der Sonotrode 4 können beispielsweise die in der nachfolgenden Tabelle aufgeführten Richtwerte gewählt werden, wobei jeweils eine Kombination zu wählen ist, die auf eine sinnvolle Frequenz und Schwingungsform führt.

| Größe | Beispiel für ca. 21 kHz | vorzugsweise zu wählender Bereich | möglicher Bereich |
|---|---|---|---|
| 2*L1 | 60 mm | 10 .. 200 mm | 1 .. 1000 mm |
| L2/L1 | 77% | 60 .. 90% | 20 .. 99.9% |
| L4 | 108 mm | 30 .. 600 mm | 2 .. 5000 mm |
| Anzahl Ausnehmungen | 9 | 1 .. 20 | 2 .. 200 |
| s | 8 mm | 2 .. 30 mm | 0,5 .. 100 mm |
| a | 3 mm | 0,1 .. 10 mm | 1 µm.. 100 mm |
| Verhältnis a/s | 37,5% | 10 .. 200% | 0,001 .. 500% |
| t (ggf. variabel) | 5 mm | 0,1 .. 20 mm | 0,1 µm .. 100 mm |

In Figur 1b ist die Schwingungsverteilung des Ultraschallwerkzeugs 1 entlang der Längsmittelachse 7 dargestellt (Schwingungsrichtung parallel zur Längsmittelachse 7). Im Konverter 2 und im Booster 3 ergeben sich typische λ/2-Verteilungen der Längsschwingung mit Schwingungsknoten 10 in Nähe der Querschnittssprünge 6 und 9, die sich jeweils in etwa auf halber Länge von Konverter 2 und Booster 3 befinden. Es entstehen lokale Schwingungsmaxima in den Außenbereichen von Konverter 2 und Booster 3, wobei die Amplituden vom linken zum rechten Rand der Halbwellen jeweils in etwa im Verhältnis der Querschnitte am Querschnittssprung 6 bzw. 9 transformiert werden. Entlang der Längsmittelachse 7 der Sonotrode 4 ergibt sich eine konstante Amplitude, alle Punkte auf der Längsmittelachse 7 der Sonotrode 4 bewegen sich mit gleicher Amplitude und in identischer Phasenlage relativ zur Bewegung am Übergang zum Booster 3. Die charakteristische λ-Amplitudenverteilung der Sonotrode 4 ergibt sich wie oben beschrieben in Querrichtung zur Längsmittelachse 7.

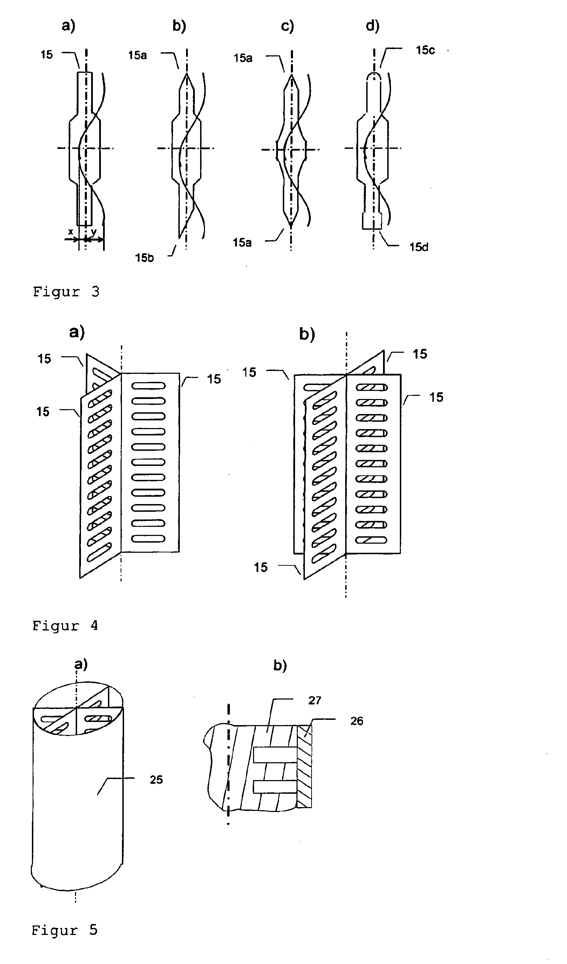

Die in Fig. 3a, b, c beispielhaft dargestellten Querschnittsverläufe von Sonotroden mit nicht-konstantem Querschnitt weisen eine sich von der Längsmittelachse 7 nach außen verjüngende Form auf. Dies führt dazu, dass die Amplituden der Schwingungen parallel zur Längsmittelachse 7 an den Außenseiten 15 in Fig. 3a größer sind als im Bereich der Längsmittelachse: Während das Amplitudenverhältnis y/x bei konstanter Dicke t in etwa eins beträgt, kann es durch passende sich nach außen verjüngende Querschnittsübergänge auf Werte weit über eins vergrößert werden. Es sind viele Querschnittsübergänge denkbar (z. B. Exponentialverlauf, Stufung, radialer oder konischer Übergang und dergleichen mehr, sowie Kombinationen derselben).

Die genaue geometrische Gestaltung der Sonotrode 4 im Bereich der Außenseiten 15 wird sich zumeist nach den Anforderungen der Prozesse richten. Es sind in Fig. 3a bis d mehrere beispielhafte Varianten von Außenseiten 15 skizziert, z. B. in Fig. 3b zwei Typen von Schneiden (15a und 15b). In Fig. 3d ist die Sonotrode im Bereich der Außenseite 15d etwas dicker ausgeführt, was z. B. beim Ultraschallschweißen oder beim Schleifen vorteilhaft zur flächigen Schallauskopplung in die Prozesszone genutzt werden könnte. Die gegenüberliegende Außenseite 15c in Fig. 3d ist ein Beispiel für die verrundete Ausführung einer Außenseite 15.

Entlang der Außenseiten 15 sollte der Querschnitt entsprechend der Anforderungen des Prozesses gestaltet werden, der mit der Sonotrode bedient werden soll, z. B. könnten die in Fig. 3b dargestellten Schneiden 15a und 15b geschliffen werden; denkbar ist auch eine gezahnte Sägekante zum Ultraschallsägen o. ä. Vorzugsweise (aber nicht notwendigerweise) sollte die Struktur der Sonotrode 4 symmetrisch gestaltet sein, damit sich die Schwingungsform stabil ausbilden kann und damit parasitäre Schwingungsformen im Betrieb möglichst nicht angeregt werden. Wenn dies für die Anwendung sinnvoll erscheint, können die beiden Außenkanten 15 aber auch unterschiedlich ausgeführt werden, z. B. wie in Fig. 3d, wobei auf eine passende Frequenzanpassung der Geometrien zu achten ist. Es könnte beispielsweise zweckmäßig sein, die Außenseiten 15 für unterschiedliche Schneidaufgaben optimiert zu gestalten (z.B. Schneiden 15a und 15b in Fig. 3b) oder nur eine Außenseite 15 als Arbeitsseite auszuführen (z.B. Ausführungen 15c und 15d in Fig. 3d).

Beim Ultraschallschneiden mit einem Ultraschallwerkzeug 1 gemäß Fig. 1a mit einer Sonotrode gemäß Fig. 3c wird eine der beiden Außenseiten 15, die vorteilhaft als geschliffene Schneide 15a ausgeführt ist, gegen ein zu schneidendes Gut gedrückt. Bei Aktivierung der Ultraschall-Leistung an einem Ultraschallgenerator (nicht dargestellt), die an den Elektrodenblechen 18 und 19 des Konverters 2 elektrisch in das Ultraschallwerkzeug 1 so eingekoppelt wird, dass die in Fig. 1b skizzierte Resonanzschwingung angeregt wird, schwingt die Sonotrode 4 entlang ihrer Schneiden 15a parallel, aber in Gegenphase zur Längsmittelachse 7, und zwar ohne Schwingungsknoten entlang der Schneiden 15a. Die Oszillation führt unter Anpressdruck der Schneide 15a gegen das Schneidgut zum Eindringen der Schneide 15a in dasselbe. Als Schneidgut kommen vor allem duktile Materialien in Frage, die sich günstig schneiden lassen, wenn die Schneidoszillation senkrecht zum Anpressdruck wirkt. Beispielsweise lassen sich Backwaren, Obst, Käse, Fleisch- und Wurstwaren, Textilien, Kunststoffteile, Papier, Pappe u.v.m. schneiden.

Beim Ultraschallsägen ist die Sonotrode 4 ähnlich aufgebaut wie beim Schneiden, jedoch wird die als Arbeitsseite genutzte Außenseite 15 mit einer geeigneten Sägezahnstruktur versehen. Es kommen unterschiedlichste Ausführungen dieser Profilierung in Frage wie man sie z. B. von Sägeblättern oder Ultraschall-Knochensägen kennt. Neben geometrisch definierten Sägekanten sind auch geometrisch unbestimmte Sägekanten denkbar (z.B. diamantbesetzte Sägekanten wie sie zum Sägen sprödharter Materialien eingesetzt werden). Der Sägeprozess erfolgt analog zum Ultraschallschneiden durch Druck der oszillierenden Arbeitsseite (z.B. Sägekante) gegen das Schneidgut. Als Schneidsubstanzen kommen dabei vor allem Werkstoffe in Frage, die sich spanend bearbeiten lassen, z. B. Holz, Knochen, Knäckebrot, Hartschäume u.v.m.

Für das Ultraschallschweißen wird typischerweise eine Sonotrode 4 mit stumpfer Arbeitsseite verwendet, z. B. die Ausführung 15d wie in Fig. 3d abgebildet. Sollen zwei oder mehr dünne Metallbleche miteinander verschweißt werden, so werden diese - wie beim Ultraschallschweißen von Metallen üblich - überlappend auf einen Amboss gelegt. Die Schweißsonotrode wird auf das Blechpaket aufgesetzt, so dass die miteinander zu verschweißenden Blechlagen aufeinander gedrückt werden. Bei Ultraschallaktivierung führt die Schweißsonotrode eine entsprechende Bewegung aus wie zuvor beim Schneiden beschrieben, wobei die Bleche aufgrund Druck und Reibung in den Berührungszonen miteinander verschweißen. Auf entsprechende Weise können z. B. Drähte miteinander verschweißt werden oder simultan mehrere Drähte oder Litzenpakete miteinander und/oder auf ein Trägermaterial geschweißt werden. Bekannt sind in der Ultraschalltechnik z. B. die Prozesse Litzenschweißen und Drahtbonden, bei denen durch Anwendung des hier beschriebenen Ultraschallwerkzeugtyps viele Prozessverbesserungen möglich sind.

Makroskopisch betrachtet erfahren an eine der Außenkanten 15 seitlich oder stirnseitig angepresste Gegenstände entlang dieser Außenkante 15 eine Reduzierung der Grenzflächenreibung durch Ultraschall. Dies wirkt sich beim Ultraschallschneiden vorteilhaft aus, da Adhäsionen an der Sonotrode 4 stark reduziert werden und z. B. beim Schneiden cremiger Lebensmittel deren Verformung maßgeblich reduziert wird. Die Reibungsreduktion kann aber auch für Transport- oder Förderprozesse ausgenutzt werden: Über eine als Sonotrode 4 gestaltete Fläche (z. B. in der Bauform gemäß Fig. 3d) gleiten Gegenstände mit deutlich reduziertem Reibungswiderstand, sobald die Ultraschallschwingung aktiviert ist. Das Ultraschallwerkzeug 1 könnte daher zur Teileförderung in industriellen Produktionsabläufen eingesetzt werden, z. B. als Ersatz für Schüttelrutschen oder Wendelförderer. Weiterhin kann das Ultraschallwerkzeug 1 verwendet werden, um Kleinteile mit einer Presspassung in einen Gegenkörper einzusetzen, so z. B. eine Passfeder in einen Gegenkörper mit einer entsprechenden Nut.

Zum Ultraschallschleifen wird vorzugsweise eine Sonotrode 4 mit stumpfer Außenseite (z.B. 15c oder 15d) verwendet, wobei diese mit Schleifkörnern oder auch eingebetteten Diamanten versehen werden kann. Der Schleifprozess erfolgt auch hier durch statischen Druck auf die stumpfe Schleifkante, während gleichzeitig bei Ultraschallaktivierung die eigentliche Schleifbewegung als Hochfrequenz-Oszillation erfolgt. Denkbar ist beim Schleifen (und bei diversen anderen Prozessen) auch, Bearbeitungszonen seitlich an der Sonotrode 4 vorzusehen.

Bei allen genannten Prozessen ist es denkbar, eine zusätzliche Führungsbewegung zu überlagern. So könnte beispielsweise das Ultraschallwerkzeug 1 in Rotation um seine Längsmittelachse 7 versetzt werden, um eine Innenbohrung auszuschleifen. Denkbar ist auch eine lineare Führungsbewegung (z.B. in handgeführten Ultraschallschneidsystemen).

In Fig. 4a und 4b sind zwei Varianten zu der Sonotrode 4 dargestellt. Hier sind jeweils mehrere Außenseiten 15 zur Schallauskopplung erkennbar. Wie in Fig. 1 können die geschlitzten Rechteckplatten in Verlängerung der gemeinsamen Längsmittelachsen angeregt werden, so dass die drei bzw. vier Außenseiten 15 gleichförmig und parallel, aber in Gegenphase zur Längsmittelachse 7 schwingen, und zwar ohne Knoten entlang der Außenseiten 15. Die rotationssymmetrische Struktur erlaubt bei geeigneter Wahl der Abmessungen die definierte Ausbildung entsprechender Schwingungsformen. Entsprechend sind sternförmige Varianten mit mehr als den in Fig. 4 dargestellten drei bzw. 4 Außenseiten 15 denkbar.

In Fig. 5a ist eine Erweiterung der Struktur aus Fig. 4b dargestellt. Hier ist ein zusätzlicher Hohlzylinder 25 konzentrisch zur Längsmittelachse angeordnet und außen an den geschlitzten Rechteckplatten befestigt (z.B. angeschweißt). Bei passender Dimensionierung ist es möglich, diesen auf seiner gesamten Oberfläche in gleichförmige Oszillation zu versetzen (parallel, jedoch in Gegenphase zur Schwingung der Längsmittelachse), wobei sich auf der Oberfläche keine Knoten und Bäuche der Schwingung ausbilden. Alternativ kann statt dem dargestellten System mit vier Ankopplungslinien eine Struktur wie in Fig. 4a zur Schallanregung genutzt werden, ggf. sind auch sternförmige Systeme mit mehr als vier Ankopplungslinien denkbar.

Im Grenzfall gemäß der Schnittskizze in Fig. 5b könnte die sternförmige Struktur durch einen mit seitlichen Ausnehmungen versehenen Rotationskörper 27 ersetzt werden. Der auf seiner Oberfläche in gleichförmige Schwingungen parallel zur Längsmittelachse zu versetzende, rohrförmige Rotationskörper 26 bildet dann gleichzeitig die in Radialrichtung äußere Begrenzung der Schlitze.

In allen Ausführungsbeispielen der Fig. 4 und 5 erfolgt die Schwingungsanregung ein- oder beidseitig in Verlängerung der jeweiligen Längsmittelachse.

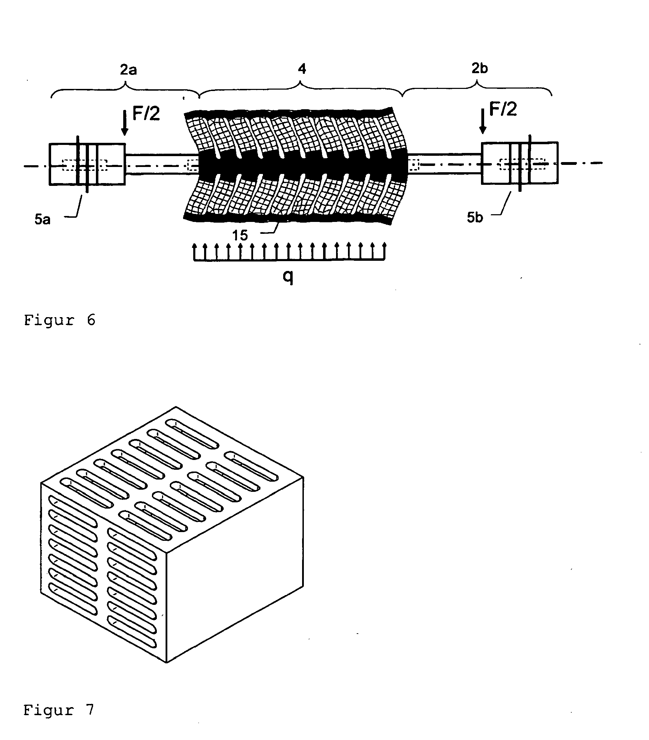

In Fig. 6 ist eine Variante zu dem System aus Fig. 1 dargestellt. Hier erfolgt die Schwingungsanregung der Sonotrode 4 simultan mittels zweier Konverter 2a und 2b. Dies kann aus zweierlei Gründen sinnvoll sein: Zum einen ist es möglich mehr Leistung in das System einzukoppeln und in eine Prozesszone an der Außenseite 15 einzukoppeln, wenn zwei Konverter verwendet werden. Zum anderen lassen sich Anpresskräfte (z. B. die skizzierte Linienlast q an der Arbeitsseite 15) sehr gut abstützen, wenn mit zwei Konvertern 2a und 2b gearbeitet wird: Bekanntlich lassen diese sich vorteilhaft in den Schwingungsknoten ihrer Längsschwingung lagern, ohne die Schwingungsform unzulässig zu stören. Bei symmetrischer Ausführung und Belastung würde in jedem der Konverter die Kraft F/2 abgestützt, wobei als Kraft F die konzentrierte Ersatzlast der Linienlast q bezeichnet wird.

Bei der simultanen Verwendung zweier Konverter 2a und 2b ist zu beachten, dass die Polarisierung der Piezoelemente 5a gegensätzlich zu der der Piezoelemente 5b gewählt werden muss, falls beide Konverter mit der gleichen elektrischen Wechselspannung betrieben werden. Falls die Konverter 2a, 2b nicht exakt gleiche Schwingungseigenschaften besitzen sollten, könnte einer der Konverter als stimmbarer Konverter gemäß der DE10 2004 057 423 A1 ausgeführt werden, um sie zu synchronisieren.

Wenn nur die Kraftabstützung, aber nicht die zweiseitige Leistungseinkopplung benötigt wird, kann einer der beiden Konverter in Fig. 6 durch einen Booster 3 (s. Fig. 1) ersetzt werden. Denkbar ist natürlich auch ein Aufbau mit zwischengeschaltetem Booster wie in Fig. 1, ggf. auf beiden Seiten der Sonotrode 4.

In Fig. 7 ist eine Ausführungsform einer Sonotrode mit großer Dicke t gezeigt. Hier sind zusätzlich zu den in der Sonotrode 4 (Fig. 1) skizzierten Ausnehmungen weitere Ausnehmungen in einer orthogonalen Ebene eingebracht, um stehende Wellen in Dickenrichtung zu unterdrücken.

## Patentansprüche

1. Vorrichtung zur Ultraschallbearbeitung mit mindestens einem Konverter (2) zur Wandlung elektrischer Schwingungen in mechanische Schwingungen und mit einer Sonotrode (4) zur Einbringung der mechanischen Schwingungen in und/oder auf ein zu bearbeitendes Material, wobei die Sonotrode (4) eine in eine Schwingungsrichtung derselben orientierte Arbeitsseite (15) und eine Anzahl an Ausnehmungen (23) aufweist, und wobei die Ausnehmungen (23) in der Schwingungsrichtung der Sonotrode (4) derart verteilt angeordnet und gestaltet sind, dass die Sonotrode (4) entlang der Arbeitsseite (15) gleichförmige Schwingungen in Richtung der Arbeitsseite (15) ausführt, **dadurch gekennzeichnet, dass** der Konverter (2) symmetrisch zur Längsmittelachse (7) der Sonotrode (4) angeordnet ist und dass die Arbeitsseite (15) in Richtung der Längsmittelachse (7) der Sonotrode (4) erstreckt angeordnet ist.

2. Vorrichtung nach Anspruch 1, **dadurch gekennzeichnet, dass** sich in der Sonotrode (4) quer zur Schwingungsrichtung eine Stehwelle ausbildet, deren Amplitude im Bereich der Arbeitsseite (15) der Sonotrode (4) ein zumindest lokales Maximum aufweist.

3. Vorrichtung nach Anspruch 1 oder 2, **dadurch gekennzeichnet, dass** eine Breite b der Sonotrode (4) quer zur Schwingungsrichtung einem ganzzahligen Vielfachen der Wellenlänge (λ) entspricht.

4. Vorrichtung nach einem der Ansprüche 1 bis 3, **dadurch gekennzeichnet, dass** die Sonotrode (4) symmetrisch bezüglich einer in Schwingungsrichtung verlaufenden Längsmittelachse (7) desselben ausgebildet ist.

5. Vorrichtung nach einem der Ansprüche 1 bis 4, **dadurch gekennzeichnet, dass** die Ausnehmungen (23) symmetrisch zur Längsmittelachse (7) der Sonotrode (4) angeordnet sind.

6. Vorrichtung nach einem der Ansprüche 1 bis 5, **dadurch gekennzeichnet, dass** die Ausnehmungen (23) eine gleiche Geometrie aufweisen.

7. Vorrichtung nach einem der Ansprüche 1 bis 6, **dadurch gekennzeichnet, dass** zwischen in Schwingungsrichtung benachbarten Ausnehmungen (23) mit der Ausnehmungsbreite a ein Steg (24) mit der Stegbreite s angeordnet ist, wobei das Verhältnis der Ausnehmungsbreite a zur Stegbreite s im Bereich von 0,2 bis 5 liegt.

8. Vorrichtung nach einem der Ansprüche 1 bis 7, **dadurch gekennzeichnet, dass** die Sonotrode (4) in einer Schwingungsebene derselben flächig ausgebildet ist mit einer Außenseite (15) als Arbeitsseite und/oder Stegen (24) zwischen den Ausnehmungen (23).

9. Vorrichtung nach einem der Ansprüche 1 bis 8, **dadurch gekennzeichnet, dass** die Sonotrode (4) in der Schwingungsebene einen rechtwinkligen Querschnitt aufweist mit einer Länge L4 der Arbeitsseite (15), die größer oder gleich der Breite b der Sonotrode (4) ist.

10. Vorrichtung nach einem der Ansprüche 1 bis 9, **dadurch gekennzeichnet, dass** die Sonotrode (4) aus einer Anzahl kreuz- oder sternförmig angeordneter Rechteckplatten gebildet ist mit einer Mehrzahl von Außenseiten als Arbeitsseiten und Stegen (24) zwischen den Ausnehmungen (23).

11. Vorrichtung nach einem der Ansprüche 1 bis 10, **dadurch gekennzeichnet, dass** eine Tiefe t der Sonotrode (4) zur Amplitudenverstärkung von der Längsmittelachse (7) in Richtung der Außenseite (15) verjüngt ausgebildet ist.

12. Vorrichtung nach einem der Ansprüche 1 bis 7, **dadurch gekennzeichnet, dass** die Sonotrode(27)als ein Zylinder mit einer von der Mantelfläche des Zylinders (28) gebildeten Arbeitsseite und ringschlitzförmigen Ausnehmungen ausgeführt wird.

13. Vorrichtung nach einem der Ansprüche 1 bis 12, **dadurch gekennzeichnet, dass** zwischen dem Konverter (2) und der Sonotrode (4) ein Booster (3) angeordnet ist zur Verstärkung der von dem Konverter (2) bereitgestellten mechanischen Schwingungsamplitude.

14. Vorrichtung nach einem der Ansprüche 1 bis 13, **dadurch gekennzeichnet, dass** die Sonotrode (4) in einem Schwingungsbauch desselben an den Konverter (2) und/oder den Booster (3) angebunden ist.

15. Verwendung einer Vorrichtung nach einem der Ansprüche 1 bis 14 zur Ultraschallbearbeitung.

16. Verfahren zur Ultraschallbearbeitung, wobei eine Sonotrode (4) zur Einbringung der mechanischen Schwingungen in und/oder auf ein zu bearbeitendes Material von einem Konverter (2) zur Wandlung elektrischer Schwingungen in mechanische Schwingungen zu Schwingungen in einer Schwingungsrichtung angeregt wird, wobei eine Anzahl von Ausnehmungen (23) in Schwingungsrichtung der Sonotrode (4) derart verteilt angeordnet wird, dass eine zu der Schwingungsrichtung der Sonotrode (4) im Wesentlichen parallel orientierte Arbeitsseite (15) der Sonotrode (4) zu gleichförmigen Schwingungen parallel zu der Arbeitsseite (15) angeregt wird, **dadurch gekennzeichnet, dass** die Schwingungen der Sonotrode (4), deren Arbeitsseite (15) in Richtung der Längsmittelachse (7) erstreckt angeordnet ist, durch einen symmetrisch zur Längsmittelachse (7) der Sonotrode (4) angeordneten Konverter (2) angeregt werden.

## Claims

1. Device for ultrasonic processing having at least one converter (2) for converting electrical vibrations into mechanical vibrations, and having an ultrasonic horn (4) for introducing the mechanical vibrations into and/or onto a material to be processed, wherein the ultrasonic horn (4) comprises a working side (15) oriented in a vibration direction thereof and a number of recesses (23), and wherein the recesses (23) are arranged and configured distributed in the vibration direction of the ultrasonic horn (4) in such a manner that the ultrasonic horn (4) executes vibrations - which are uniform along the working side (15) - in the direction of the working side (15), **characterised in that** the converter (2) is arranged symmetrically with respect to the longitudinal central axis (7) of the ultrasonic horn (4), and **in that** the working side (15) is arranged so as to extend in the direction of the longitudinal central axis (7) of the ultrasonic horn (4).

2. Device as claimed in claim 1, **characterised in that** a standing wave is formed in the ultrasonic horn (4) transverse to the vibration direction, the amplitude of the standing wave having an at least local maximum in the region of the working side (15) of the ultrasonic horn (4).

3. Device as claimed in claim 1 or 2, **characterised in that** a width b of the ultrasonic horn (4) transverse to the vibration direction corresponds to an integer multiple of the wavelength (λ).

4. Device as claimed in any one of claims 1 to 3, **characterised in that** the ultrasonic horn (4) is formed symmetrically with respect to a longitudinal central axis (7) thereof extending in the vibration direction.

5. Device as claimed in any one of claims 1 to 4, **characterised in that** the recesses (23) are arranged symmetrically with respect to the longitudinal central axis (7) of the ultrasonic horn (4).

6. Device as claimed in any one of claims 1 to 5, **characterised in that** the recesses (23) have an identical geometry.

7. Device as claimed in any one of claims 1 to 6, **characterised in that** a web (24) having the web width s is arranged between recesses (23) which are adjacent in the vibration direction and have the recess width a, wherein the ratio of the recess width a to the web width s is in the range of 0.2 to 5.

8. Device as claimed in any one of claims 1 to 7, **characterised in that** the ultrasonic horn (4) is formed to be two-dimensional in a vibration plane thereof, having an outer side (15) as the working side and/or webs (24) between the recesses (23).

9. Device as claimed in any one of claims 1 to 8, **characterised in that** the ultrasonic horn (4) has a rectangular cross-section in the vibration plane, having a length L4 of the working side (15) which is greater than or equal to the width b of the ultrasonic horn (4).

10. Device as claimed in any one of claims 1 to 9, **characterised in that** the ultrasonic horn (4) is formed from a number of rectangular plates arranged in a cruciform or star-shaped manner, having a plurality of outer sides as the working sides and webs (24) between the recesses (23).

11. Device as claimed in any one of claims 1 to 10, **characterised in that** a depth t of the ultrasonic horn (4) is formed so as to taper from the longitudinal central axis (7) in the direction of the outer side (15) in order to increase amplitude.

12. Device as claimed in any one of claims 1 to 7, **characterised in that** the ultrasonic horn (27) is configured as a cylinder having a working side formed by the peripheral surface of the cylinder (28) and recesses in the shape of an annular slot.

13. Device as claimed in any one of claims 1 to 12, **characterised in that** a booster (3) is arranged between the converter (2) and the ultrasonic horn (4) so as to increase the mechanical vibration amplitude provided by the converter (2).

14. Device as claimed in any one of claims 1 to 13, **characterised in that** the ultrasonic horn (4) is connected to the converter (2) and/or the booster (3) in an antinode thereof.

15. Use of a device as claimed in any one of claims 1 to 14 for ultrasonic processing.

16. Method for ultrasonic processing, wherein an ultrasonic horn (4) is activated by a converter (2), which converts electrical vibrations into mechanical vibrations, to produce vibrations in a vibration direction so as to introduce the mechanical vibrations into and/or onto a material to be processed, wherein a number of recesses (23) are arranged distributed in the vibration direction of the ultrasonic horn (4) in such a manner that a working side (15) of the ultrasonic horn (4) oriented substantially in parallel with the vibration direction of the ultrasonic horn (4) is activated to produce uniform vibrations in parallel with the working side (15), **characterised in that** the vibrations of the ultrasonic horn (4), whose working side (15) is arranged so as to extend in the direction of the longitudinal central axis (7), are activated by a converter (2) arranged symmetrically with respect to the longitudinal central axis (7) of the ultrasonic horn (4).

## Revendications

1. Dispositif d'usinage ultrasonique comportant au moins un convertisseur (2) pour la conversion de vibrations électriques en vibrations mécaniques et avec une sonotrode (4) pour l'introduction des vibrations mécaniques dans et/ou sur un matériau à usiner, dans lequel la sonotrode (4) présente une face de travail (15) orientée dans une direction de vibration de celle-ci et un certain nombre d'évidements (23), et dans lequel les évidements (23) sont disposés et conformés dans la direction de vibration de la sonotrode (4) de telle manière que la sonotrode (4) réalise le long de la face de travail (15) des vibrations homogènes dans la direction de la face de travail (15), **caractérisé par le fait que** le convertisseur (2) est disposé symétrique à l'axe central longitudinal (7) de la sonotrode (4) et que la face de travail (15) est disposée dans la direction de l'axe central longitudinal (7) de la sonotrode (4).

2. Dispositif selon la revendication 1, **caractérisé par le fait qu'**une onde stationnaire se forme dans la sonotrode (4) transversalement à la direction de vibration, dont l'amplitude présente, dans la zone de la face de travail (15) de la sonotrode (4), un maximum au moins local.

3. Dispositif selon la revendication 1 ou 2, **caractérisé par le fait qu'**une largeur b de la sonotrode (4) transversalement à la direction de vibration correspond à un multiple entier de la longueur d'onde (λ).

4. Dispositif selon l'une des revendications 1 à 3, **caractérisé par le fait que** la sonotrode (4) est conformée symétrique par rapport à un axe central longitudinal s'étendant dans une direction de vibration (7) de celle-ci.

5. Dispositif selon l'une des revendications 1 à 4, **caractérisé par le fait que** les évidements (23) sont disposés symétriques à l'axe central longitudinal (7) de la sonotrode (4).

6. Dispositif selon l'une des revendications 1 à 5, **caractérisé par le fait que** les évidements (23) présentent une géométrie identique.

7. Dispositif selon l'une des revendications 1 à 6, **caractérisé par le fait qu'**une traverse (24) avec la largeur de traverse s est disposée entre des évidements (23) adjacents dans la direction de vibration avec la largeur d'évidement a, le rapport entre la largeur d'évidement a et la largeur de traverse s étant compris entre 0,2 et 5.

8. Dispositif selon l'une des revendications 1 à 7, **caractérisé par le fait que** la sonotrode (4) est réalisée à plat dans un plan de vibration de celle-ci avec une face extérieure (15) en tant que face de travail et/ou des traverses (24) entre les évidements (23).

9. Dispositif selon l'une des revendications 1 à 8, **caractérisé par le fait que** la sonotrode (4) présente dans le plan de vibration une section à angle droit avec une longueur L4 de la face de travail (15), qui est plus grande ou égale à la largeur b de la sonotrode (4).

10. Dispositif selon l'une des revendications 1 à 9, **caractérisé par le fait que** la sonotrode (4) est formée d'un nombre de plaques rectangulaires disposées en forme de croix ou d'étoile avec une pluralité de faces extérieures en tant de faces de travail ou de traverses (24) entre les évidements (23).

11. Dispositif selon l'une des revendications 1 à 10, **caractérisé par le fait qu'**une profondeur t de la sonotrode (4) est conformée en se rétrécissant, pour le gain d'amplitude, depuis l'axe central longitudinal (7) dans la direction de la face extérieure (15).

12. Dispositif selon l'une des revendications 1 à 7, **caractérisé par le fait que** la sonotrode (27) est réalisée sous la forme d'un cylindre avec une face de travail formée avec la surface d'enveloppe du cylindre (28) et des évidements en forme de fente annulaire.

13. Dispositif selon l'une des revendications 1 à 12, **caractérisé par le fait qu'**un booster (3) est disposé entre le convertisseur (2) et la sonotrode (4) pour le gain de l'amplitude de vibration mécanique prévue par le convertisseur (2).

14. Dispositif selon l'une des revendications 1 à 13, **caractérisé par le fait que** la sonotrode (4) est raccordée dans un ventre de vibration de celle-ci au convertisseur (2) et/ou au booster (3).

15. Utilisation d'un dispositif selon l'une des revendications 1 à 14 pour l'usinage ultrasonique.

16. Procédé d'usinage ultrasonique, une sonotrode (4) pour l'introduction des vibrations mécaniques dans et/ou sur un matériau à usiner étant stimulée en vibrations par un convertisseur (2) pour la conversion de vibrations électriques en vibrations mécaniques dans une direction de vibration, un certain nombre d'évidements (23) étant disposé dans la direction de vibration de la sonotrode (4) de telle manière qu'une face de travail (15) de la sonotrode (4) orientée sensiblement parallèle à la direction de vibration de la sonotrode (1) est stimulée en vibrations homogènes parallèlement à la face de travail (15), **caractérisé par le fait que** les vibrations de la sonotrode (4), dont la face de travail (15) est disposée étendue dans la direction de l'axe central longitudinal (7), sont stimulées par un convertisseur (2) disposé symétrique à l'axe central longitudinal (7) de la sonotrode (4).
